(19) Europäisches Patentamt
European Patent Office
Office européen des brevets

(11) **EP 4 491 600 A1**

(12) **EUROPEAN PATENT APPLICATION**

(43) Date of publication:
**15.01.2025 Bulletin 2025/03**

(21) Application number: **23306217.3**

(22) Date of filing: **13.07.2023**

(51) International Patent Classification (IPC):
**C04B 35/482** (2006.01)  **C04B 28/06** (2006.01)
**C04B 35/63** (2006.01)  **C04B 35/66** (2006.01)
**C04B 7/32** (2006.01)  **B22D 41/52** (2006.01)
**C04B 35/64** (2006.01)

(52) Cooperative Patent Classification (CPC):
**C04B 35/482; B22D 41/18; B22D 41/28;**
**B22D 41/54; C04B 7/32; C04B 28/06;**
**C04B 35/6303; C04B 35/64; C04B 35/66;**
C04B 2235/3206; C04B 2235/3208;
C04B 2235/3222; C04B 2235/3224;
C04B 2235/3225; C04B 2235/3229;  (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **ImerTech SAS**
**75015 Paris (FR)**

(72) Inventors:
• **ANEZIRIS, Christos**
**75015 Paris (FR)**
• **HEUER, Claudia**
**75015 Paris (FR)**
• **PREISE, Angelika**
**75015 Paris (FR)**
• **SOTH, Ratana**
**75015 Paris (FR)**

(74) Representative: **Haseltine Lake Kempner LLP**
**One Portwall Square**
**Portwall Lane**
**Bristol BS1 6BH (GB)**

(54) **REFRACTORY COMPOSITIONS**

(57) Mixtures comprising zirconia and binder, processes for preparing refractory materials from such mixtures, refractory materials obtained from such mixtures, and uses of binders in a mixture comprising zirconia to stabilize a refractory material formed from the mixture and/or to improve the thermal shock resistance of a refractory material formed from the mixture.

Fig. 1

EP 4 491 600 A1

(Cont. next page)

(52) Cooperative Patent Classification (CPC): (Cont.)
C04B 2235/3232; C04B 2235/3244;
C04B 2235/3246; C04B 2235/5427;
C04B 2235/5436; C04B 2235/5463;
C04B 2235/6562; C04B 2235/6567;
C04B 2235/661; C04B 2235/763; C04B 2235/765;
C04B 2235/77; C04B 2235/96; C04B 2235/9607

## Description

### TECHNICAL FIELD

The present disclosure concerns mixtures comprising zirconia and binder, processes for preparing refractory materials from such mixtures, refractory materials obtained from such mixtures, and uses of binders in a mixture comprising zirconia to stabilize a refractory material formed from the mixture and/or to improve the thermal shock resistance of a refractory material formed from the mixture.

### BACKGROUND

Refractory materials have properties that make them suitable for use as heat-resistant materials at high temperature. Refractory materials are widely used in ferrous and non-ferrous metallurgy such as for tanks, ladles, furnaces, crucibles, blast furnaces, hearths, vessels, vessel spouts, tundishes, reaction chambers, troughs, burners, burner nozzles, stoppers, sliding gate plates and other equipment to protect against chemical and mechanical deformation caused by liquid metal and/or slag.

Refractory compositions typically comprise a refractory particulate composition and a binder. The binder serves to bond together a loose powdery mix of the refractory particulate composition, allowing it to be shaped, for example, cast, and then to set and harden for handling and further processing, e.g., sintering.

Zirconia is a promising functional material for refractory applications. Zirconia based refractories and ceramics are widely used in continuous steel casting as tundish nozzles, sliding plate or as wear parts in areas with high thermal stresses. In comparison to other refractory materials, zirconia has excellent corrosion and erosion resistance. However, a disadvantage of zirconia refractories and ceramics is their sensitivity to thermal shock.

For environmental reasons, heavy industries such as the steel industry are increasingly developing new processes using hydrogen burners. However, a hydrogen flame burns hotter than in conventional processes and the flame often moves closer to the tip of the burner nozzle, increasing the risk of damage and failure of the burner nozzle. Thus, there is an ongoing need for zirconia-based refractory and ceramic materials with suitable thermal shock resistance properties. The present invention seeks to address this challenge through the provision of zirconia-based refractories exhibiting desirable properties such as thermal shock resistance.

### SUMMARY

According to a first aspect, there is provided a mixture comprising zirconia and binder, wherein the binder comprises at least two oxides selected from: calcium oxide, magnesium oxide, yttrium oxide, cerium oxide, titanium oxide, europium oxide, scandium oxide, ytterbium oxide, gadolinium oxide, gadolinium zirconium oxide and neodymium zirconium oxide.

The mixture may comprise zirconia and binder, wherein the binder, in terms of chemical composition, comprises calcium oxide and magnesium oxide; and/or yttrium oxide; and/or cerium oxide.

The mixture may also comprise zirconia and binder, wherein the binder, in terms of chemical composition, comprises calcium oxide and magnesium oxide.

The zirconia may be pre-stabilised zirconia containing at least 10 vol.% tetragonal phase.

Alternatively, the zirconia may be monoclinic zirconia and the mixture may further comprise one or more stabilizers (i.e. one or more compounds which may be used to stabilise a high-temperature phase of zirconia at lower temperatures) in an amount sufficient to obtain, following heat treatment, pre-stabilised zirconia containing at least 10 vol.% tetragonal phase. The monoclinic zirconia may contain no less than 90 vol.%, for example, no less than 95 vol.% monoclinic phase. The one or more stabilisers may be provided with (e.g. mixed with) the monoclinic zirconia. The one or more stabilisers may be selected from: magnesium oxide, calcium oxide, yttrium oxide, cerium oxide, titanium oxide, europium oxide, scandium oxide, ytterbium oxide, gadolinium oxide, gadolinium zirconium oxide, neodymium zirconium oxide, calcium silicate and calcium aluminate. It will be appreciated that the one or more stabilisers in the mixture are distinct from the at least two oxides in the binder.

The mixture may comprise zirconia and binder, wherein the binder, in terms of chemical composition, comprises calcium oxide and magnesium oxide.

The binder may be present in an amount up to about 8.5 wt. %, for example, up to about 6.0 wt. %, for example, from about 2.0 wt. % to about 6.0 wt. %, based on the total dry weight of the zirconia.

The binder may be an aluminate comprising calcium oxide and magnesium oxide; and/or yttrium oxide; and/or cerium oxide.

The binder may comprise a calcium aluminate mineralogical phase and a magnesium aluminate spinel mineralogical phase, optionally further comprising less than about 15 wt. % lime (CaO) based on the dry weight of the binder.

At least a portion of the zirconia may be zirconia stabilized by yttrium oxide, calcium oxide, magnesium oxide and/or cerium oxide.

The zirconia may be stabilized by yttrium oxide, for example, stabilised with up to about 8 wt. % yttrium oxide, and may having a $d_{50}$ of from about 75 $\mu$m to about 125 $\mu$m and a $d_{90}$ of from about 350 $\mu$m to about 425 $\mu$m.

The zirconia may be stabilized by magnesium oxide, for example, stabilised with up to about 5 wt. % magnesium oxide, and may have a $d_{50}$ of from about 400 $\mu$m to about 450 $\mu$m and a $d_{90}$ of from about 800 $\mu$m to about 850 $\mu$m.

The zirconia may be co-stabilized by two or more of yttrium oxide, magnesium oxide, calcium oxide and cerium oxide, for example, co-stabilized by yttrium oxide and magnesium oxide.

The mixture may comprise at least about 90.0 wt. % zirconia, based on the total dry weight of the mixture.

The mixtures may comprise up to about 40 wt. % water, based on the total dry weight of the zirconia and the binder.

The mixture may further comprise an additive selected from an accelerator, retarder, pH controller, rheology modifier and combinations thereof. The total amount of additive may be from about 0.1 wt. % to about 5 wt. %, based on the total dry weight of the zirconia and the binder.

Following heat treatment of the mixture to form a refractory material: (i) at least 30 vol. %, for example, 40 vol. % of the zirconia in the refractory material may have a tetragonal phase ; and/or (ii) the vol. % of tetragonal phase in the refractory material may be greater than the vol.% of tetragonal phase in the mixture prior to heat treatment; and/or (iii) zirconia in the refractory material is stabilized by two or more of yttria, magnesia, calcia and ceria, and/or (iii) a majority of zirconia grains in the microstructure of the refractory material may be less than 20 mm in size .

According to a second aspect, there provided a process for preparing a refractory material, comprising shaping the mixture according to the first aspect, and any embodiment thereof, and heat treating at a temperature suitable to obtain a refractory material.

Shaping may comprise pressing, casting, molding, extruding or coating.

Heat treating may comprise a dwell time between about 0.5 and 10 hours at a dwell temperature of at least about 1200 °C. The 'dwell temperature' is the maximum temperature at which the temperature is held for a period of time, e.g., 1 or 2 hours, following heating up and before cooling down.

The heat treating may comprise sintering, optionally in an oxidizing atmosphere, at a heating rate of 1-5 °C/min to the dwell temperature, which may be between about 1500 °C and 1700 °C.

The process may further comprise preparing the mixture in dry form at a first location, and shaping the mixture and heat treating in a second location. Water and/or additives may be combined with the dry mixture prior to shaping.

According to a third aspect, there is provided a refractory material obtainable by: (i) a process according to the second aspect; or (ii) shaping and heat treating a mixture according to first aspect at a suitable temperature to obtain a refractory material.

The refractory material may have a remaining strength of at least 20 %, for example, at least 50 %, or at least 70 %, wherein remaining strength is determined by equation (1):

(1)    [(flexural strength, $\sigma_{Retained}$ (MPa) according to DIN EN 843-2993-6, following one thermal shock treatment at 950 °C in accordance with DIN EN 993-11) / (flexural strength, $\sigma_{RT}$ (MPa) according to DIN EN 843-2993-6, before thermal shock treatment)] x 100

Additionally or alternatively, the refractory material may have a remaining Young's modulus of at least 20 %, for example, at least 50 %, or at least 70 %, wherein remaining Young's modulus is determined by equation (2):

(2)    [(Young's modulus, $E_{Retained}$ (GPa) according to DIN 843-2, following one thermal shock treatment at 950 °C in accordance with DIN EN 993-11) / (Young's modulus, $E_{RT}$ (GPa) according to DIN 843-2, before thermal shock treatment)] x 100

At least 30 vol. %, for example, 40 vol. % of the zirconia in the refractory material may have a tetragonal phase; and/or (ii) the vol. % of tetragonal phase in the refractory material may be greater than the vol.% of tetragonal phase in the mixture prior to heat treatment; and/or (iii) zirconia in the refractory material is stabilized by two or more of yttria, magnesia, calcia and ceria, and/or (iv) a majority of zirconia grains in the microstructure of the refractory material may be less than 20 mm in size .

The refractory material may have one or more of the following properties: (i) a shrinkage of no greater than about 10.0 %; (ii) an open porosity of less than about 30 %; (iii) a $CTE_{1000\ °C}$ of from about 6.8 to 11 x $10^{-6}$/K.

The refractory material may be in the form of a burner, burner nozzle, stopper, sliding gate plate, heat shield, filter (e.g., for melt filtration) and sensor.

According to a fourth aspect, the present invention is directed to the use of binder comprising at least two oxides selected from: calcium oxide, magnesium oxide, yttrium oxide, cerium oxide, titanium oxide, europium oxide, scandium oxide, ytterbium oxide, gadolinium oxide, gadolinium zirconium oxide and neodymium zirconium oxide, for example, binder comprising calcium oxide and magnesium oxide, for example, binder comprising a combination of calcium aluminate and magnesium aluminate spinel, in a mixture comprising zirconia to (i) stabilize, for example, increase the proportion of, tetragonal phase zirconia in a refractory material formed from the mixture, or (ii) improve the thermal shock resistance of a refractory material formed from the mixture.

According to a fifth aspect, the present invention is directed to the use of a mixture according to the first aspect to improve the thermal shock resistance of a refractory material formed therefrom.

## BRIEF DESCRIPTION OF THE FIGURES

Embodiments will now be described by way of example only, with reference to the Figures, in which:

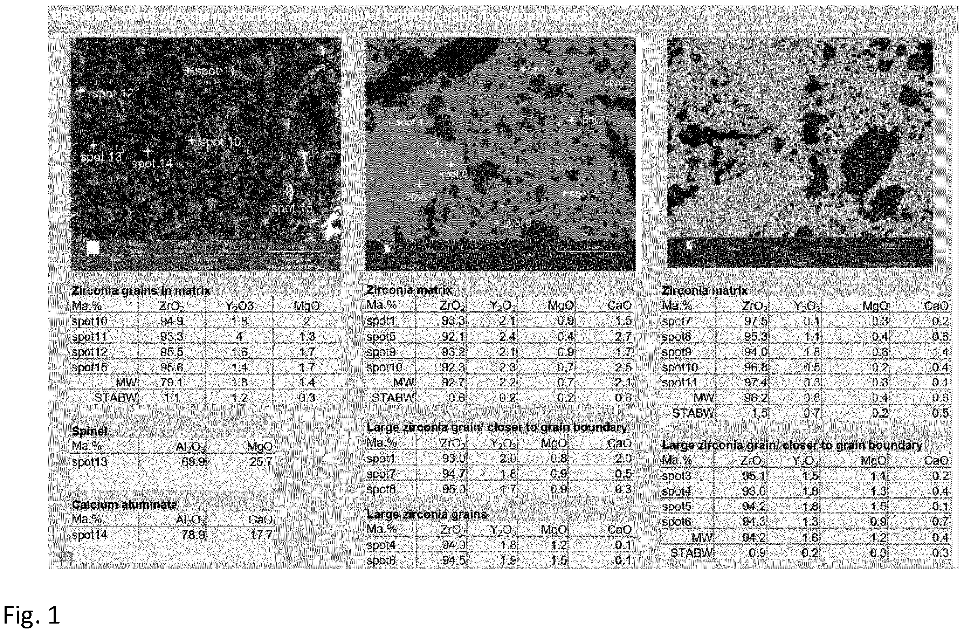

**Figure 1** shows data obtained by energy dispersive spectroscopy (EDS) during scanning electron microscopy (SEM) characterisation of samples of refractory composition #9 prior to sintering (left hand side), after sintering (middle) and after thermal shock (right hand side).

## DETAILED DESCRIPTION

It has advantageously been found that high temperatures properties, such as thermal shock resistance, of zirconia based refractory materials can be improved via heat treatment of a mixture comprising zirconia and a binder comprising at least two oxides selected from: calcium oxide, magnesium oxide, yttrium oxide, cerium oxide, titanium oxide, europium oxide, scandium oxide, ytterbium oxide, gadolinium oxide, gadolinium zirconium oxide and neodymium zirconium oxide. Without wishing to be bound by theory, it is believed that the presence of the at least two oxides in the binder starting material promotes formation of tetragonal phase zirconia in the resulting refractory material, and stabilizes tetragonal phase change also at room temperature, thereby improving the thermal shock resistance of the zirconia based refractory material.

*Mixture comprising zirconia and binder*

The mixture comprises zirconia and binder, wherein the binder, in terms of chemical composition, comprises at least two oxides selected from: calcium oxide, magnesium oxide, yttrium oxide, cerium oxide, titanium oxide, europium oxide, scandium oxide, ytterbium oxide, gadolinium oxide, gadolinium zirconium oxide and neodymium zirconium oxide.

The chemical composition of the mixture, or components thereof, such as zirconia and binder, may be determined by X-ray fluorescence (XRF), for example, according to DIN EN ISO 12677.

*- Zirconia*

Substantially pure zirconia exists in three different phases. The monoclinic phase is thermodynamically stable and exists below about 1170 °C. Above this temperature a transition to a tetragonal phase occurs. At temperatures above about 2370 °C a transition to a cubic phase occurs. The transition temperatures may shift in mixtures or non-pure zirconia materials. The phase transformations are associated with volume changes, with the tetragonal higher-temperature phase having the smallest volume. The transition from the tetragonal to the monoclinic phase, which has the largest volume, is associated with a volume increase of about 3-5 %, which may exceed the fracture strain of the component.

The zirconia component of the mixture may be substantially pure zirconia. At least a portion of the zirconia in the mixture may be stabilized zirconia or partially stabilized zirconia, such as tetragonal zirconia polycrystal (TZP). At least a portion of the zirconia may be zirconia stabilized by yttrium oxide, calcium oxide, magnesium oxide, and/or cerium oxide. The zirconia component of the mixture may comprise, consist essentially of, or consist of stabilized zirconia, such as zirconia stabilized by yttrium oxide, calcium oxide, magnesium oxide, and/or cerium oxide, for example, zirconia stabilized by yttrium oxide, zirconia stabilized by magnesium oxide, or mixtures thereof. The zirconia component of the mixture may comprise, consist essentially of, or consist of zirconia stabilized by yttrium oxide. The zirconia component of the mixture may comprise, consist essentially of, or consist of by magnesium oxide.

The zirconia may be pre-stabilised zirconia containing at least 10 vol.% tetragonal phase. Alternatively, the zirconia may be monoclinic zirconia. The monoclinic zirconia may contain no less than 90 vol.% monoclinic phase.

Pure and stabilised zirconia may obtained from any suitable source or provided by any suitable method, for example, via sintering of zirconia and stabiliser, electrofusion and/or derived from zirconia recyclate.

The zirconia component may have a defined particle size distribution, for example, a $d_{50}$ of from about 0.1 $\mu$m to about 1000 $\mu$m and a $d_{90}$ of from about 1.0 $\mu$m to about 2000 $\mu$m for example, a $d_{50}$ of from about 0.1 $\mu$m to about 500 $\mu$m and a $d_{90}$ of from about 1.0 $\mu$m to about 1000 $\mu$m.

Unless otherwise stated, particle size properties may be measured in a well-known manner by dry Malvern laser scattering. In this technique, the size of particles in powders (dry process using 3 bar of pressure for power dispersion) may be measured using the diffraction of a laser beam, based on the application of Fraunhofer theory. Such a machine, for example, a Masterizer 3000 (as supplied by Malvern Panalytical) provides measurements and a plot of the cumulative percentage by volume of particles having a size, referred to in the art as the "equivalent spherical diameter" (e.s.d), less than given e.s.d values. The mean particle size $d_{50}$ is the value determined in this way of the particle e.s.d. at which there are 50% by volume of the particles which have an equivalent spherical diameter less than that $d_{50}$ value. The $d_{98}$, $d_{90}$, $d_{75}$, $d_{25}$ and the $d_{10}$ are the values determined in this way of the particle e.s.d. at which there are 98%, 90%, 75%, 25% and 10% respectively by volume of the particles which have an equivalent spherical diameter less than that $d_{98}$, $d_{90}$, $d_{75}$, $d_{25}$ or $d_{10}$ value.

Particle size properties may also be measured by sieve analysis, as is well known in the art, for example using an electromagnetic vibratory sieve shaker.

The zirconia component may have a $d_{50}$ of from about 350 $\mu$m to about 500 $\mu$m and a $d_{90}$ of from about 800 $\mu$m to about 1000 $\mu$m, for example, a $d_{50}$ of from about 350 $\mu$m to about 400 $\mu$m and a $d_{90}$ of from about 800 $\mu$m to about 900 $\mu$m.

The zirconia component may have a $d_{50}$ of from about 50 $\mu$m to about 150 $\mu$m and a $d_{90}$ of from about 300 $\mu$m to about 500 $\mu$m, for example, a $d_{50}$ of from about 75 $\mu$m to about 125 $\mu$m and a $d_{90}$ of from about 350 $\mu$m to about 450 $\mu$m.

The zirconia component may have a $d_{50}$ of from about 1 $\mu$m to about 15 $\mu$m and a $d_{90}$ of from about 15 $\mu$m to about 50 $\mu$m, for example, a $d_{50}$ of from about 3 $\mu$m to about 12 $\mu$m and a $d_{90}$ of from about 20 $\mu$m to about 40 $\mu$m.

The zirconia stabilized by yttrium oxide may be stabilised with up to about 8 wt. % yttrium oxide, for example, from about 1 wt. % to about 8 wt. % yttrium oxide, or from about 2 wt. % to about 7 wt. % yttrium oxide, or from about 5 wt. % to about 7 wt. % yttrium oxide or from about 3 wt. % to about 6 wt. % yttrium oxide, or from about 3 wt. % to about 5 wt. % yttrium oxide, based on the total dry weight of the zirconia component. The zirconia stabilized by yttrium have may have a defined particle size distribution, for example, a $d_{50}$ of from about 2 $\mu$m to about 125 $\mu$m and a $d_{90}$ of from about 10 $\mu$m to about 425 $\mu$m or, for example, a $d_{50}$ of from about 75 $\mu$m to about 125 $\mu$m and a $d_{90}$ of from about 350 $\mu$m to about 425 $\mu$m, or for example, a $d_{50}$ of from about 90 $\mu$m to about 110 $\mu$m and a $d_{90}$ of from about 375 $\mu$m to about 400 $\mu$m.

The zirconia stabilized by magnesium oxide may be stabilised with up to about 8 wt. % magnesium oxide, for example, from about 1 wt. % to about 8 wt. % magnesium oxide, or from about 2 wt. % to about 7 wt. % magnesium oxide, or from about 2 wt. % to about 5 wt. % magnesium oxide, or from about 2 wt. % to about 4 wt. % magnesium oxide, based on the total dry weight of the zirconia component. The zirconia stabilized by magnesium oxide may have a defined particle size distribution, for example, a $d_{50}$ of from about 350 $\mu$m to about 500 $\mu$m and a $d_{90}$ of from about 800 $\mu$m to about 1000 $\mu$m, for example, a $d_{50}$ of from about 400 $\mu$m to about 450 $\mu$m and a $d_{90}$ of from about 800 $\mu$m to about 900 $\mu$m.

The zirconia may be co-stabilized by two or more of yttrium oxide, magnesium oxide, calcium oxide and cerium oxide, for example, co-stabilized by yttrium oxide and magnesium oxide, co-stabilized by yttrium oxide and calcium oxide, co-stabilized by calcium oxide and magnesium oxide, or co-stabilized by yttrium oxide, calcium oxide and magnesium oxide. The co-stabilization may be present in the zirconia component of the mixture or may occur during heat-treatment of the mixture. For example, the zirconia component of the mixture may be singly stabilized by yttrium oxide or magnesium oxide and combined with a binder comprising calcium oxide and magnesium oxide. The mixture is then heat treated (e.g., sintered), and during heat treatment the zirconia is further stabilized from the calcium oxide and/or magnesium oxide present in the binder, thereby resulting in a co-stabilised zirconia phase in the refractory material.

By chemical composition, the zirconia component will typically comprise at least about 90.0 wt. % zirconia, or at least about 91.0 wt. % zirconia, or at least about 92.0 wt. % zirconia, or at least about 93.0 wt. % zirconia, or at least about 94.0 wt. % zirconia, or at least about 95.0 wt. % zirconia. Typically, the zirconia component will comprise no more than about 99.0 wt. % zirconia, for example, no more than about 98.0 wt. % zirconia, no more than about 97.0 wt. % zirconia, or no more than about 96.0 wt. % zirconia.

*- Binder*

The binder is an aluminate comprising, in terms of chemical composition, at least two oxides selected from: calcium oxide, magnesium oxide, yttrium oxide, cerium oxide, titanium oxide, europium oxide, scandium oxide, ytterbium oxide, gadolinium oxide, gadolinium zirconium oxide and neodymium zirconium oxide.

Advantageously, the binder may be an aluminate comprising calcium oxide and magnesium oxide. For example, the binder may comprise a calcium aluminate mineralogical phase and a magnesium aluminate spinel mineralogical phase, optionally further comprising less than about 15 wt. % lime (CaO) based on the dry weight of the binder. The magnesium aluminate spinel phase of such a binder may comprise between 68 % and 81 % of the binder by dry weight. The calcium aluminates CA and $CA_2$ (C being CaO and A being $Al_2O_3$) of such a binder may comprise between 19 % and 32 % of the binder by dry weight. This binder may comprise, for example, by dry weight of the binder: 71 +/-2 % MA (M being MgO and A being $Al_2O_3$), 18+/ -2 % CA, 11+/-2 % $CA_2$. This binder may be referred to as a CMAX binder with X being the MA content (wt. %), which may range from about 50 wt. % to about 90 wt. % (i.e., CMA50 to CMA90, for example, from about 60 wt. % to about 80 wt. %, or from about 65 wt. % to about 75 wt. %, or from about 71 wt. to about 73 wt. %, or about 72 wt. % (i.e., CMA72). Such binders may have the following chemical composition by dry weight of the binder: lime (CaO) - 4 to 12 %, magnesia (MgO) - 19 to 23 %, alumina ($Al_2O_3$) - 69-74 %.

Suitable binders of this type include those described in US 6730159 B1, the entire contents of which are hereby incorporated by reference. This binder may be made through frittering by burning of a blend of raw materials comprising dolomite, alumina magnesia. Specific examples of suitable binders and their method of preparation are described in US 6730159 B1 at, for example, col. 4 lines 44 to col. 5, line 30, as well as Example 1 and Example 2.

The binder may constitute a mixture of binders, for example, a mixture of the foregoing binder (e.g., CMA50 to CMA90, more specifically CMA72), plus other calcium oxide, magnesium oxide, yttrium oxide, cerium oxide, titanium oxide, europium oxide, scandium oxide, ytterbium oxide, gadolinium oxide, gadolinium zirconium oxide and/or neodymium zirconium oxide containing binders. For example, the binder may constitute a mixture of the foregoing binder (e.g., CMA50 to CMA90, more specifically CMA72) and a magnesium aluminate spinel binder such as, for example, AR78, which is an alumina-rich spine binder comprising about 78 % MA by dry weight of the binder. The additional binder may be a variant of AR78, for example, ARX with X being the MA content (wt. %), which may range from about 50 wt. % to about 90 wt. % (i.e., AR50 to AR90), for example, from about 60 wt. % to about 90 wt. %, or from about 70 wt. % to about 85 wt. %, or from about 75 wt. to about 80 wt. %, or about 78 wt. % (i.e., AR78).

Additionally or alternatively, the binder may comprise components which form MA spinel during heat treatment, for example, during sintering.

The binder may have a defined particle size distribution, for example, a $d_{50}$ of from about 5 $\mu$m to about 50 $\mu$m and a $d_{90}$ of from about 10 $\mu$m to about 250 $\mu$m.

*- Mixture*

The mixture may comprise at least about 80.0 wt. % zirconia, based on the total dry weight of the mixture, for example, at least about 85.0 wt. % zirconia, or at least about 90.0 wt. % zirconia, or at least about 91.0 wt. % zirconia, or at least about 92.0 wt. % zirconia, or at least about 93.0 wt. % zirconia, or at least about 94.0 wt. % zirconia, or at least about 95.0 wt. % zirconia. Typically, the mixture comprises no more than about 99.0 wt. % zirconia, for example, no more than about 98.0 wt. % zirconia, no more than about 97.0 wt. % zirconia, or no more than about 96.0 wt. % zirconia.

The binder may be present in an amount up to about 8.5 wt. %, based on the total dry weight of the zirconia, for example, in an amount of from about 1.0 wt. % to about 8.5 wt. %, or an amount up to about 6.0 wt. %, for example, from about 1.0 wt. % to about 6.0 wt. %, or from about 2.0 wt. % to about 6.0 wt. %, based on the total dry weight of the zirconia. The binder may constitute a mixture of the CMAX and ARX binders described above, for example, a mixture of CMA72 and AR78. The mixture of CMAX and ARX (e.g., CMA72 and AR78) may be a mixture in a weight ratio of from about 1:1 to about 10:1 (CMAX:ARX), for example, from about 1:1 to about 5:1, or from about 1:1 to about 3:1, or from about 1:1 to about 2:1.

The mixtures may comprise up to about 40 wt. % water, based on the total dry weight of the zirconia, for example, from about 1.0 wt. % to about 30.0 wt. water, or from about 1.0 wt. % to about 20.0 wt. % water, or from about 1.0 wt. % to about 10.0 wt. % water, for from about 2.0 wt. % to about 10.0 wt. % water, for from about 5.0 wt. % to about 10.0 wt. % water, based on the total dry weight of the zirconia. The water may be deionized water.

The mixture may further comprise an additive selected from an accelerator, retarder, pH controller, rheology modifier and combinations thereof. For example, the additive may be a rheology modifier such as an ADW or ADS rheology modifier (available from ALMATIS GmbH, Germany) or Peramin® AL200 (available from Imerys S.A., France). The total amount of additive may be from about 0.1 wt. % to about 5 wt. %, based on the total dry weight of the zirconia, for example, from about 0.1 wt. % to about 2.5 wt. %, or from about 0.5 wt. % to about 2 wt. %.

Following heat treatment of the mixture to form a refractory material: (i) at least 30 vol. %, for example, 40 vol. % of the zirconia in the refractory material may have a tetragonal phase ; and/or (ii) the vol. % of tetragonal phase in the refractory material may be greater than the vol.% of tetragonal phase in the mixture prior to heat treatment; and/or (iii) zirconia in the refractory material is stabilized by two or more of yttria, magnesia, calcia and ceria, and/or (iv) a majority of zirconia grains in the microstructure of the refractory material may be less than 20 mm in size. Further details of these embodiments are provided below in relation to the description of the refractory material.

*Process for preparing a refractory material*

A process for preparing a refractory material comprises shaping the mixture according to the first aspect and heat treating at a temperature suitable to obtain a refractory material.

The mixture may be prepared by any suitable method. For example, the mixture may be prepared by dry mixing of the dry powdery components, i.e., zirconia and binder. This may be performed in a suitable mixing apparatus such as, for example, a laboratory mixer such as those available from Toni Technik, Germany. Water and other optional additives may be added by stepwise addition. Alternatively, the dry powder components may be added to an admixture of water and additives. Water and additives, such as organic additives, may be admixed using any suitable mixing apparatus including, for example, a homogenizer. The mixing of the dry powder components, either before or during addition of water and other optional additives, may be carried out in order to modify the particle size distribution of the mixture, for example, to produce a finer particle size distribution compared to the particular size distribution of the dry powder component starting materials. In other processes, the mixing process does not affect the particle size of the dry powdery component starting materials. The consistency of the final mass may vary from slurry to paste-like to lumps/clumps, depending on the method of shaping that is to be utilised, e.g., shaping by slip casting, vibration casting, molding, extruding, or coating.

Shaping may comprise pressing, casting, molding, extruding or coating. Casting includes slip and vibration casting. Molds may be metallic, for example, steel, or polymeric, for example, formed from polypropylene.

Depending on the type of shaping, the shaped mixture may be set for a period of time, for example, up to about 24 hours, typically 12 to 24 hours, followed by demolding (again, dependent on the form of shaping), and then dried prior to heat treatment (e.g., sintering). Drying typically constitutes drying at an elevated temperature, for example, between about 40 °C and 120 °C for a suitable period of time, for example, between about 6 hours and 24 hours.

Heat treating may comprise a dwell time from about 0.5 and 10 hours at a dwell temperature of at least about 1200 °C. The 'dwell temperature' is the maximum temperature at which the temperature is held for a period of time, e.g., 1 or 2 hours, following heating up and before cooling down. The dwell time may be from about 1 hour to 10 hours, for example, from about 2 hours to about 10 hours, or from about 2 hours to about 5 hours. The dwell temperature may be at least about 1300 °C, or at least about 1400 °C, or at least about 1500 °C, or at least about 1600 °C. Typically, the dwell temperature is less than about 2000 °C, for example, less than about 1800 °C, or less than about 1700 °C. The dwell temperature may be from about 1600 °C to about 1700 °C. The heating rate (e.g., from room temperature) to the dwell temperature may be from about 1 to 5 °C per minute, for example, about 2 °C/min.

The heat treating may comprise sintering, optionally in an oxidizing atmosphere, at a heating rate of 1-5 °C/min to the dwell temperature, which is optionally between about 1500 °C and 1700 °C, for example, from about 1600 °C to about 1650 °C. In a generally applicable embodiment, heat treating comprises sintering in an oxidizing atmosphere at a heating rate of about 1-2 °C/min to a dwell temperature of about 1600 °C or about 1650 °C for a dwell time of about 1 to about 2 hours. Any suitable oven or furnace may be utilised for the heat treatment. The heat treated, e.g., sintered, refractory material may be cooled down to room temperature. The cooling rate be controlled or affected naturally, the latter either by taking the refractory material out of the oven/furnace following the dwell time and cooling in air to room temperature, or by switching off the oven/furnace and allowing it to cool down to room temperature.

The process may comprise mixing the dry powder components, e.g., zirconia and binder, at a first location, and shaping the mixture and heat treating in a second location. Water and/or additives may be combined with the dry mixture prior to shaping, for example, at the second location. Alternatively, the dry powder components, e.g., zirconia and binder, may be supplied separately from the first location to the second location for subsequent mixing. In a coating process the second location may be an installation site, for example, for application of a monolithic lining.

### Refractory material

A refractory material is obtainable by: (i) a process according to that described above and in accordance with the second aspect of the present invention, or (ii) shaping and heat treating a mixture according to that described above and in accordance with the first aspect of the present invention at a suitable temperature to obtain a refractory material.

The refractory material may exhibit improved thermal shock resistance.

Advantageously, the refractory material has a remaining strength of at least 20 %, for example, at least 50 %, or at least 70 %, wherein the remaining strength is determined by equation (1):

(1) [(flexural strength, $\sigma_{Retained}$ (MPa) according to DIN EN 843-2993-6, following one thermal shock treatment at 950 °C in accordance with DIN EN 993-11) / (flexural strength, $\sigma_{RT}$ (MPa) according to DIN EN 843-2993-6, before thermal shock treatment)] x 100

Advantageously, the refractory material has a remaining Young's modulus of at least 20 %, for example, at least 50 %, or at least 70 %, wherein the remaining Young's modulus is determined by equation (2):

$$(2) \quad [(\text{Young's modulus, } E_{\text{Retained}} \text{ (GPa) according to DIN 843-2, following one} \quad \text{thermal}$$

$$\text{shock treatment at 950 °C in accordance with DIN EN 993-11) / (Young's modulus, } E_{\text{RT}}$$

$$\text{(GPa) according to DIN 843-2, before thermal shock treatment)] x 100}$$

As such, thermal shock resistance may be characterised by a measure of the flexural strength and/or Young's modulus retained following thermal heat treatment. The greater the retained % the better the thermal shock resistance of the refractory material. Further details of the methods for measuring thermal shock resistance are provided in the Examples section below.

Alternatively, the refractory material has a remaining strength and/or a remaining Young's modulus of at least 20 %, for example, at least 50 %, or at least 70 %, wherein the remaining strength and/or the remaining Young's modulus are determined by the equations (1) and (2) above, save that five thermal shock treatments at 950 °C in accordance with DIN EN 993-11 are conducted to determine the retained flexural strength and/or Young's modulus.

The refractory material may have a remaining Young's modulus according to equation (2) (or the variant based on five thermal shock treatments) of from about 20 % to about 80 %, for example, from about 30 % to about 80 %, or from about 40 % to about 80 %, or from about 50 % to about 80 %, or from about 60 % to about 80 %, or from about 70 % to about 80 %.

For refractory materials formed from mixtures comprising zirconia stabilized by magnesium oxide, the refractory material may have a remaining Young's modulus according to equation (2) (or the variant based on five thermal shock treatments) of from about 50 % to about 80 %, or from about 60 % to about 80 %, or from about 70 % to about 80 %. For example, the zirconia stabilized by magnesium oxide may be stabilised with up to about 8 wt. % magnesium oxide, for example, from about 1 wt. % to about 8 wt. % magnesium oxide, or from about 2 wt. % to about 7 wt. % magnesium oxide, or from about 2 wt. % to about 5 wt. % magnesium oxide, or from about 2 wt. % to about 4 wt. % magnesium oxide, based on the total dry weight of the zirconia component. The zirconia stabilized by magnesium oxide may have a defined particle size distribution, for example, a dso of from about 350 $\mu$m to about 500 $\mu$m and a $d_{90}$ of from about 800 $\mu$m to about 1000 $\mu$m, for example, a $d_{50}$ of from about 400 $\mu$m to about 450 $\mu$m and a $d_{90}$ of from about 800 $\mu$m to about 900 $\mu$m. The binder may comprise CMAX as described above, for example, a mixture of CMAX and ARX, as described above, for example, a mixture of CMA72 and AR78. The refractory material may have been obtained by heat-treating the mixture at a dwell temperature of about 1650 °C for 2 hours.

For refractory materials formed from mixtures comprising zirconia stabilized by yttrium oxide, the refractory material may have a remaining Young's modulus according to equation (2) (or the variant based on five thermal shock treatments) of from about 20 % to about 80 %, or from about 20 % to about 60 %, or from about 20 % to about 30 %, or from about 40 % to about 60 %. For example, the zirconia stabilized by yttrium oxide may be stabilised with up to about 8 wt. % yttrium oxide, for example, from about 1 wt. % to about 8 wt. % yttrium oxide, or from about 2 wt. % to about 7 wt. % yttrium oxide, or from about 5 wt. % to about 7 wt. % yttrium oxide or from about 3 wt. % to about 6 wt. % yttrium oxide, or from about 3 wt. % to about 5 wt. % yttrium oxide, based on the total dry weight of the zirconia component. The zirconia stabilized by yttrium oxide have may have a defined particle size distribution, for example, a $d_{50}$ of from about 75 $\mu$m to about 125 $\mu$m and a $d_{90}$ of from about 350 $\mu$m to about 425 $\mu$m or, for example, a $d_{50}$ of from about 90 $\mu$m to about 110 $\mu$m and a $d_{90}$ of from about 375 $\mu$m to about 400 $\mu$m. The binder may comprise CMAX as described above, for example, a mixture of CMAX and ARX, as described above, for example, a mixture of CMA72 and AR78. The refractory material may have been obtained by heat-treating the mixture at a dwell temperature of about 1650 °C for 2 hours.

In embodiments, at least about 30 vol. % of the zirconia in the refractory material has a tetragonal phase, as determined by the X-ray diffraction method described herein. For example, from about 30 vol. % to about 90 vol. % of the zirconia in the refractory material may be a tetragonal phase, for example, from about 40 vol. % to about 90 vol. %, or from about 50 vol. % to about 90 vol. %, or from about 60 vol. % to about 90 vol. %, or from about 70 vol. % to about 90 vol. %, or from about 70 vol. % to about 85 vol. %, or from about 75 vo. % to about 80 vol. %. In these and other embodiments, no greater than about 30 vol. % of the zirconia in the refractory material may have a monoclinic phase, for example, no greater than about 25 vol. %, or no greater than about 20 vol. %. In these and other embodiments, the refractory material may have a spinel phase, for example, up to about 20 vol. % of a spine phase, for example, up to about 10 vol %, or up to about 5 vol. %.

In certain embodiments in which the refractory material is formed from a mixture comprising zirconia stabilized with magnesium oxide, from about 30 vol. % to about 60 vol. % of the zirconia in the refractory material has a tetragonal phase, for example, from about 40 vol. % to about 50 vol. %. In these and other embodiments, no greater than about 30 vol. % of the zirconia in the refractory material may have a monoclinic phase, for example, no greater than about 25 vol. %, or no greater than about 20 vol. %. In these and other embodiments, from about 10 vol. % to about 40 vol. % of the zirconia in the refractory material may have a cubic phase, for example, from about 20 vol. % to about 40 vol. %, or from about 24 vol. % to about 35 vol. %. In these and other embodiments, the refractory material may have a spinel phase, for example, up to about 20 vol. % of a spine phase, for example, up to about 10 vol. %, or up to about 5 vol. %. In

In certain embodiments, for example, embodiments in which the refractory material is formed from a mixture comprising zirconia stabilized by yttrium oxide, the vol. % of tetragonal phase in the refractory material is greater than the vol.% of tetragonal phase present in the zirconia stabilized by yttrium oxide in the mixture prior to heat treatment, for example, at least about 10 vol. greater, or at least about 20 vol. % greater, typically less than about 30 vol. %, or less than about 25 vol. % greater.

In certain embodiments, the zirconia in the refractory material is stabilized by two or more of yttria, magnesia, calcia and ceria. Such co-stabilization may arise via the starting material zirconia component included in the mixture if it is stabilized prior to heat treatment and/or stabilizing components present in the binder which serve to stabilize, or further stabilize, the zirconia during heat treatment (e.g., sintering). For example, following heat treating (e.g., sintering, e.g., at a dwell temperature 1650 °C) of a mixture comprising yttria stabilized zirconia and CMAX binder (e.g., CMA72), calcia from the binder may further stabilize zirconia tetragonal phase in the resultant refractory. Further, contrary to expectations, this stabilization can occur even if magnesia in the binder forms magnesium alumina spinel in the refractory material (i.e., does not take part in further stabilization of zirconia).

In certain embodiments, a majority (e.g. at least 50 %) of zirconia grains in the microstructure of the refractory material are less than 20 mm in size, for example, from about 250 nm to about 20 mm in size, for from about 250 nm to about 10 mm in size, or from about 250 nm to about 5 mm in size. Grain size may be determined using any suitable method including, for example, visual inspection (for relatively larger grains) or SEM (for relatively smaller grains). By 'size' is meant the longest straight-line distance that may be measured across and wholly within a grain.

The refractory material may have one or more of the following properties:

(i) a shrinkage of no greater than about 10.0 %, for example, less than about 8.0 %, or from about 0.1 to about 8.0 %, or from about 0.1 % to about 7.0 %, or no greater than about 5.0%, or no greater than about 1.0 %;

(ii) an open porosity of less than about 30.0 %, for example, less than about 25.0 %, or less than about 20.0 %, optionally at least about 10.0 %, or at least about 15.0 %; and/or

(iii) a $CTE_{1000 \, °C}$ of from about 6.8 to 11 x $10^{-6}$/K.

The refractory material may have a shrinkage of no greater than about 5.0 %, for example, no greater than about 1.0 %. For example, the zirconia may be co-stabilized by two or more of yttrium oxide, magnesium oxide, calcium oxide and cerium oxide, for example, co-stabilized by yttrium oxide and magnesium oxide and the refractory material may have a shrinkage of no greater than about 5.0 %, for example, no greater than about 1.0 %

These properties may be determined for refractory materials prepared following heat treatment of the aforementioned mixtures at a dwell temperature of 1650 °C for two or four hours. Shrinkage may be calculated according to DIN EN 993-10. The open porosity (Archimedes method) was investigated using a mercury intrusion porosimeter (Micromeritics Autopore V, USA). The coefficient of thermal expansion (CTE) may be determined on the sintered zirconia samples using a dilatometer type NETZSCH DIL402C.

The refractory material may be in the form of a burner, burner nozzle, stopper, sliding gate plate, heat shield, filter (e.g., for melt filtration), sensor or coating (e.g., a monolithic lining or coating for a high temperature mechanical part, for example, a gas turbine blade).

*Uses*

As described herein, a binder comprising at least two oxides selected from calcium oxide, magnesium oxide, yttrium oxide, cerium oxide, titanium oxide, europium oxide, scandium oxide, ytterbium oxide, gadolinium oxide, gadolinium zirconium oxide and neodymium zirconium oxide, for example, a binder comprising calcium oxide and magnesium oxide, for example, a binder comprising a combination of calcium aluminate and magnesium aluminate spinel (and including all of the binder components described above), may be used in a mixture comprising zirconia (and including all of the zirconia components described above) to (i) stabilize zirconia in a refractory material formed from the mixture, for example, increase the proportion of, tetragonal phase zirconia in a refractory material formed from the mixture, or (ii) improve the thermal shock resistance of a refractory material formed from the mixture.

As described herein, a mixture according to the first aspect of the present invention may be used in order to improve the thermal shock resistance of a refractory material formed therefrom. For example, improve the thermal shock resistance such that refractory material has a thermal shock resistance of at least 20 %, for example, at least 50 %, or at least 70 %, following thermal shock treatment, as described above.

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

**EXAMPLES**

*Materials*

- Zirconia components

Zirconia #1 = zirconia stabilized with 6 wt. % yttria; $d_{50}$ = 97.7 $\mu$m, $d_{90}$ = 385.0 $\mu$m
Zirconia #2 = zirconia stabilised with 6 wt. % yttria; $d_{50}$ = 0.2 $\mu$m, $d_{90}$ = 1.2 $\mu$m
Zirconia #3 = zirconia stabilised with 6 wt. % yttria; $d_{50}$ = 0.2 $\mu$m, $d_{90}$ = 29 $\mu$m
Zirconia #4 = zirconia stabilised with 3.25 wt. % magnesia; $d_{50}$ = 424.8 $\mu$m, $d_{90}$ = 826.1 $\mu$m
Zirconia #5 = zirconia stabilised with 2.5 wt. % yttria and 1.4 wt. % magnesia

- Binder components

CMA72 = binder comprising calcium aluminate mineralogical phase and magnesium alumina spinel (71+/-2 % MA, 18+/-2 % CA, 11+/-2 % $CA_2$ (M being MgO, C being CaO and A being $Al_2O_3$), available from Imerys S.A., France.
AR78 = alumina rich magnesium alumina spinel (about 78 wt. % alumina and about 22 wt.% magnesium aluminate spinel by dry weight), available from Almatis GmbH, Germany.
ALPHABOND300 = hydratable alumina binder (about 88 wt. % alumina), available from Almatis GmbH, Germany.

- Other additives/components

Peramin Al200 - polycarboxylate ether-based defloculant, available from Imerys S.A., France.
ADW/ADS - dispersing alumina rheology modifiers (available from ALMATIS GmbH, Germany)

Water

*Measurement techniques*

- *Particle size*

Particle size properties were measured in a well-known manner by dry Malvern laser scattering. In this technique, the size of particles in powders (dry process using 3 bar of pressure for power dispersion) may be measured using the diffraction of a laser beam, based on the application of Fraunhofer theory. Such a machine, for example, a Mastersizer 3000 (as supplied by Malvern Panalytical) provides measurements and a plot of the cumulative percentage by volume of particles having a size, referred to in the art as the "equivalent spherical diameter" (e.s.d), less than given e.s.d values. The mean particle size $d_{50}$ is the value determined in this way of the particle e.s.d. at which there are 50% by volume of the particles which have an equivalent spherical diameter less than that $d_{50}$ value. The $d_{98}$, $d_{90}$, $d_{75}$, $d_{25}$ and the $d_{10}$ are the values determined in this way of the particle e.s.d. at which there are 98%, 90%, 75%, 25% and 10% respectively by volume of the particles which have an equivalent spherical diameter less than that $d_{98}$, $d_{90}$, $d_{75}$, $d_{25}$ or $d_{10}$ value.

- *Thermal shock resistance:*

For vibration cast samples with the dimension 25 x 25 x 150 mm$^3$:

- Based on DIN EN 993-11
- Samples were preheated at 110 °C and then placed in a furnace at 950 °C for 30 min in order to achieve uniform temperature within the samples. Afterwards, the samples were removed from the furnace and quenched by blowing with compressed air (p = 0.1 MPa) for 5 min (i.e., one thermal shock). For the 'Additional experiments' presented below, 5 cycles of thermal shock were carried prior to measurement of mechanical properties.
- *Young's modulus and Flexural strength*

Young's modulus was determined according to DIN EN 843-2 (Method C). The dynamic Young's modulus of sintered sample bars was measured using an ultrasonic system UKS-D equipped with a transmitter-receiver pair UPG/UPE-D (Geotron-Elektronik, Germany).

The flexural strength at room temperature as well as the remaining strength after thermal shock were determined according to DIN EN 843-1 using three-point bending tests. Flexural strength testing was performed on two different universal testing machines type TIRATEST TT2420 or TT2850 (TIRA Technik, Germany) with 1 kN and 20 kN force transducers, respectively. The TIRATEST TT2420 with a 1 kN force transducer was used to test slip cast samples. The TIRATEST TT2850 with a 20 kN force transducer was used to test vibration cast samples and samples cast from self-flowing masses. The chosen cross head speed was 0.5 mm/min and the spans were 40 mm for the slip casted and 125 mm for the vibration cast samples.

*- X-ray diffraction method*

The phase composition (e.g., monoclinic, tetragonal, cubic) of the zirconia refractory materials was investigated by X-ray diffraction. The measurements were performed in Bragg-Brentano geometry using Cu-K$\alpha$ radiation at an angular range 2$\theta$ of 2° to 140° with Empyrean, Malvern Panalytical GmbH, Germany. The qualitative phase analysis was carried out using X'Pert High Score Plus software with ICSD database. The quantitative phase analysis was done by Rietveld refinement applying the structural models as listed in Table 1. The Rwp-parameter (weighted-pattern factor) was used to rate the quality of the fit between calculated and experimental diffraction data.

Table 1. Overview of the used structure models for Rietveld refinement of zirconia

| Phase | #ICSD |
|---|---|
| $ZrO_2$-monoclinic | 60900 |
| $ZrO_2$-tetragonal | 93124 |
| $ZrO_2$-cubic | 28990 |

*Experimental details, results and commentary*

Mixtures were prepared having the refractory compositions #1 to #11 shown in Tables 1 to 11. In these Tables, the amounts of the dry components present are expressed in grams and in wt. % relative to the total weight of zirconia and binder in the mixture. The amount of water is expressed in grams and in wt. % relative to the total weight of dry components in the mixture.

Table 1.

| Composition #1 | | |
|---|---|---|
| | Amount (wt. %) | Amount (g) |
| Zirconia #1 | 95.8 | 2457.5 |
| CMA72 | 2.5 | 63.6 |
| AR78 | 1.7 | 43.2 |
| Peramin AL200 | 0.1 | 2.6 |
| Water | 8.3 | 212.3 |

Table 2.

| Composition #2 | | |
|---|---|---|
| | Amount (wt. %) | Amount (g) |
| Zirconia #1 | 69.3 | 1800 |
| Zirconia #2 | 2.9 | 75.00 |
| Zirconia #3 | 24.1 | 625.00 |
| CMA72 | 2.4 | 62.5 |

(continued)

| Composition #2 | | |
|---|---|---|
| | Amount (wt. %) | Amount (g) |
| AR78 | 1.3 | 34.0 |
| Peramin AL200 | 0.1 | 2.6 |
| Water | 7.3 | 190.84 |

Table 3.

| Composition #3 | | |
|---|---|---|
| | Amount (wt. %) | Amount (g) |
| Zirconia #4 | 95.9 | 2457.5 |
| CMA72 | 2.4 | 62.5 |
| AR78 | 1.7 | 42.5 |
| Peramin AL200 | 0.1 | 2.65 |
| Water | 8.7 | 222.4 |

Table 4.

| Composition #4 | | |
|---|---|---|
| | Amount (wt. %) | Amount (g) |
| Zirconia #1 | 97.6 | 2500 |
| CMA72 | 2.4 | 62.5 |
| AR78 | - | - |
| Peramin AL200 | 0.1 | 2.6 |
| Water | 7.8 | 199.28 |

Table 5.

| Composition #5 | | |
|---|---|---|
| | Amount (wt. %) | Amount (g) |
| Zirconia #1 | 70.2 | 1440.0 |
| Zirconia #2 | 2.9 | 60.0 |
| Zirconia #3 | 24.4 | 500.0 |
| CMA72 | 2.4 | 50.0 |
| AR78 | - | - |
| Peramin AL200 | 0.1 | 2.1 |
| Water | 7.3 | 150.4 |

Table 6.

| | Composition #6 | |
|---|---|---|
| | Amount (wt. %) | Amount (g) |
| Zirconia #4 | 94.3 | 2500 |
| CMA72 | 5.7 | 150 |
| AR78 | - | - |

(continued)

|  | Composition #6 | |
|---|---|---|
|  | Amount (wt. %) | Amount (g) |
| Peramin AL200 | 0.1 | 2.65 |
| Water | 8.4 | 222.4 |

Table 7.

|  | Composition #7 | |
|---|---|---|
|  | Amount (wt. %) | Amount (g) |
| Zirconia #4 | 92.7 | 2457.5 |
| CMA72 | 5.7 | 150 |
| AR78 | 1.6 | 42.5 |
| Peramin AL200 | 0.1 | 2.65 |
| Water | 8.2 | 216.6 |

Table 8.

|  | Composition #8 | |
|---|---|---|
|  | Amount (wt. %) | Amount (g) |
| Zirconia #5 | 97 | 1940 |
| CMA72 | 3 | 60 |
| ALPHABOND300 | - | - |
| ADW/ADS | - | - |
| AR78 | - | - |
| Peramin AL200 | 0.1 | 2 |
| Water | 4.3 | 86 |

Table 9.

|  | Composition #9 | |
|---|---|---|
|  | Amount (wt. %) | Amount (g) |
| Zirconia #5 | 94 | 3290.0 |
| CMA72 | 6 | 210.0 |
| ALPHABOND300 | - | - |
| ADW/ADS | - | - |
| AR78 | - | - |
| Peramin AL200 | 0.1 | 3.5 |
| Water | 4.4 | 153.7 |

Table 10.

|  | Composition #10 | |
|---|---|---|
|  | Amount (wt. %) | Amount (g) |
| Zirconia #5 | 91 | 1820 |
| CMA72 | 9 | 180 |

(continued)

|  | Composition #10 | |
| --- | --- | --- |
|  | Amount (wt. %) | Amount (g) |
| ALPHABOND300 | - | - |
| ADW/ADS | - | - |
| AR78 | - | - |
| Peramin AL200 | 0.1 | 2 |
| Water | 4.6 | 92.4 |

Table 11.

|  | Composition #11 | |
| --- | --- | --- |
|  | Amount (wt. %) | Amount (g) |
| Zirconia #5 | 99 | 2970 |
| CMA72 | - | - |
| ALPHABOND300 | 1 | 30 |
| ADW/ADS | 1 | 30 |
| AR78 | - | - |
| Peramin AL200 | - | - |
| Water | 5.8 | 174 |

For each refractory composition #1 to #7, sample bars having dimensions 25 mm x 25 mm x 150 mm were prepared vibration casting. The cast sample bars were sintered in an oxidising air atmosphere at 1650 °C, with a heating rate of 2 K/min up to the maximum temperature. In each case, samples were sintered with dwell times of 120 minutes and 240 minutes. Shrinkage (determination of the bar length before and after sintering), open porosity (by the Archimedes method), flexural strength (before and after thermal shock (TS)) and Young's modulus (before and after thermal shock (TS)) were determined and quantitative X-ray analysis was carried caried out. The physical property results are shown in Tables 12 to 15. The X-ray analysis results (in terms of the vol. % content of monoclinic (M), tetragonal (T) and cubic (C) zirconia and spinel (S) phases present) are shown in Table 16.

Table 12.

|  | Composition #4 | Composition #1 |
| --- | --- | --- |
| Properties following 120 min dwell at 1650° C | | |
| Shrinkage (%) | 5.5 ±0.1 | 6.7 t 0.3 |
| Open porosity (%) | 29.9 ± 0.6 | 23.7 ± 0.2 |
| Flexural strength (MPa) | 14.5 ± 0.6 | 19.1 ±0.6 |
| Young's Modulus (GPa) | 61.7 ±2.2 | 89.0 ± 1.7 |
| Flexural strength after TS (MPa) | 2.1 ±1.5 | 2.5 ±1.1 |
| Young's Modulus after TS (GPa) | 34.6 ± 4.1 | 37.0 ± n.d. |
| Properties following 140 min dwell at 1650° C | | |
| Shrinkage (%) | 6.2 ± 0.2 | 6.9 ± 0.3 |
| Open porosity (%) | 28.8 ± 0.9 | 22.6 ±0.1 |
| Flexural strength (MPa) | 28.7 ± 8.9 | 52.2 ± 5.5 |
| Young's Modulus (GPa) | 62.9 ± 1.1 | 93.4 ± 11.2 |
| Flexural strength after TS (MPa) | 2.8 ± n.d. | 2.9 ± n.d. |

(continued)

| Properties following 140 min dwell at 1650° C | | |
|---|---|---|
| Young's Modulus after TS (GPa) | 46.9 ± n.d. | 42.6 ± n.d. |

Table 13.

| | Composition #5 | Composition #2 |
|---|---|---|
| Properties following 120 min dwell at 1650° C | | |
| Shrinkage (%) | 7.6 ± 0.0 | 7.3 ± 0.0 |
| Open porosity (%) | 19.3 ± 0.3 | 17.8 ± 0.1 |
| Flexural strength (MPa) | 25.6 ± 0.2 | 79.2 ± 1.0 |
| Young's Modulus (GPa) | 100.6 ±9.4 | 107.5 ± 0.2 |
| Flexural strength after TS (MPa) | 2.2 ± n.d. | 2.3 ± n.d. |
| Young's Modulus after TS (GPa) | 25.1 ± n.d. | 31.3 t n.d. |
| Properties following 140 min dwell at 1650° C | | |
| Shrinkage (%) | 7.5 ± 0.3 | 7.8 ± 0.2 |
| Open porosity (%) | 23.8 ± 0.6 | 18.2 ± n.d. |
| Flexural strength (MPa) | 59.4 ± 9.1 | 69.4 ± n.d. |
| Young's Modulus (GPa) | 93.0 ± 2.1 | 110.8 ± n.d. |
| Flexural strength after TS (MPa) | 2.8 ± n.d. | 5.0 ± n.d. |
| Young's Modulus after TS (GPa) | 33.5 ± n.d. | 48.8 ± n.d. |

Table 14.

| | Composition #3 |
|---|---|
| Properties following 120 min dwell at 1650° C | |
| Shrinkage (%) | 6.9 ± 0.6 |
| Open porosity (%) | 17.9 ± 0.3 |
| Flexural strength (MPa) | 46.4 ± 1.8 |
| Young's Modulus (GPa) | 76.1 ± 3.4 |
| Flexural strength after TS (MPa) | 10.5 ± n.d. |
| Young's Modulus after TS (GPa) | 58.1 ± n.d. |
| Properties following 140 min dwell at 1650° C | |
| Shrinkage (%) | 7.0 ± 0.1 |
| Open porosity (%) | 17.8 ± 0.1 |
| Flexural strength (MPa) | 40.1 ± 2.7 |
| Young's Modulus (GPa) | 76.3 ± 3.2 |
| Flexural strength after TS (MPa) | 10 ± n.d. |
| Young's Modulus after TS (GPa) | 59.9 ± n.d. |

Table 15.

|  | Composition #6 | Composition #7 |
|---|---|---|
| Properties following 120 min dwell at 1650° C | | |
| Shrinkage (%) | 5.9 ±0.1 | 6.1 ± 0.3 |
| Open porosity (%) | 14.5 ± 2.1 | 18.6 ± 2.5 |
| Flexural strength (MPa) | 51.8 ± 1.7 | 51.4 ± 3.2 |
| Young's Modulus (GPa) | 82.5 ± 6.7 | 105.8 ± n.d. |
| Flexural strength after TS (MPa) | 8.9 ± n.d. | 10.2 ± n.d. |
| Young's Modulus after TS (GPa) | 65.5 ± n.d. | 75.2 t n.d. |
| Properties following 140 min dwell at 1650° C | | |
| Shrinkage (%) | 6.5 ± 0.2 | 6.6 ± 0.2 |
| Open porosity (%) | 17.3 ± 0.6 | 17.1 ± 0.6 |
| Flexural strength (MPa) | 54.7 ± 5.3 | 57.9 ± 1.8 |
| Young's Modulus (GPa) | 99.8 ± 1.4 | 98.9 ± 6.2 |
| Flexural strength after TS (MPa) | 9.0 ± n.d. | 10.3 ± n.d. |
| Young's Modulus after TS (GPa) | 70.5 ± n.d. | 78.4 ± n.d. |

Table 16.

|  | Before sintering | | | After 240 minute dwell at 1650°C | | | |
|---|---|---|---|---|---|---|---|
| Composition | M | T | C | M | T | C | S |
| #1 | 46 | 54 | - | 19.4 | 76.0 | - | 4.7 |
| #2 | 46 | 54 | - | 13.0 | 80.9 | - | 6.1 |
| #3 | 46 | 54 | - | - | - | - | - |
| #4 | 46 | 54 | - | 19.0 | 77.9 | - | 3.1 |
| #5 | 46 | 54 | - | 18.2 | 78.4 | - | 3.3 |
| #6 | 46 | 54 | - | 17.5 | 45.0 | 31.3 | 6.1 |
| #7 | 46 | 54 | - | 19.3 | 48.1 | 24.5 | 8.0 |

For each refractory composition #8 to #11, sample bars having dimensions 25 mm x 25 mm x 150 mm were cast (without vibration) from the self-flowing mass. The sample bars were sintered in an oxidising air atmosphere at 1650 °C, with a heating rate of 1 K/min up to the maximum temperature. In each case, samples were sintered with dwell times of 120 minutes. Shrinkage (determination of the bar length before and after sintering), bulk density, open porosity (by the Archimedes method), flexural strength (before and after 1, 3 or 5 thermal shocks (TS)) and Young's modulus (before and after 1, 3 or 5 thermal shocks (TS)) were determined and X-ray analysis of the phases present was carried caried out. The physical property results and X-ray analysis results are shown in Table 17.

Table 17.

|  | Composition #8 | Composition #9 | Composition #10 | Composition #11 |
|---|---|---|---|---|
| Shrinkage (%) | 0.86 ± 0.2 | 0.85 ± 0.2 | 0.72 ±0.1 | 0.65 ± 0.2 |
| Bulk density (g/cm$^3$) | 4.4 ±0.1 | 4.3 ± 0.2 | 4.2 ± 0.2 | 4.4 ±0.1 |
| Open porosity (%) | 17.7 ± 0.4 | 16.8 ± 0.2 | 16.8 ± 0.2 | 17.4 ± 0.2 |
| Flexural strength (MPa) | 12.6 ± 1.6 | 14.8 ± 1.8 | 11.2 ± 0.6 | 8.5 ± 1.7 |
| Young's Modulus (Gpa) | 32.4 ± 1.8 | 39.5 t 0.9 | 22.2 ± 0.0 | 18.9 ± 1.7 |
| Remaining strength after 1 x TS (Mpa) | 9.6 ± 0.8 | 9.2 ±1.0 | 5.5 ± 0.2 | 4.5 ±0.1 |

(continued)

| | Composition #8 | Composition #9 | Composition #10 | Composition #11 |
|---|---|---|---|---|
| Young's Modulus after 1 x TS (Gpa) | 21.5 ± 2.0 | 30.9 ± 0.0 | 12.5 ± 0.6 | 9.5 ± 0.4 |
| Remaining strength after 3 x TS (Mpa) | - | 6.7 ± 0.8 | - | - |
| Young's Modulus after 3 x TS (Gpa) | - | 12.2 ± 0.92 | - | - |
| Remaining strength after 5 x TS (Mpa) | - | 5.4 ± 1.5 | - | - |
| Young's Modulus after 5 x TS (Gpa) | - | 10.9 ± 0.2 | - | - |
| Monoclinic (%) | 46.1 | 33.6 | 21.0 | 83.8 |
| Tetragonal (%) | 45.1 | 50.6 | 60.7 | 6.9 |
| Cubic (%) | - | - | - | 4.4 |
| Spinel (%) | 8.8 | 15.9 | 18.2 | 4.9 |
| Alumina (%) | - | - | - | - |
| Rwp (%) | 7.9558 | 7.6099 | 7.8855 | 10.0218 |

The XRD phase analysis for the initial powder used to produce Compositions #8 to #11 is shown in Table 18 for comparison.

Table 18.

| Monoclinic (%) | Tetragonal (%) | Cubic (%) | Spinel (%) | Alumina (%) | Others (%) | Rwp (%) |
|---|---|---|---|---|---|---|
| 56 | 16 | 27 | - | Trace | Trace | 12.9587 |

The microstructure of a sintered sample of Composition #9 was characterised using scanning electron microscopy (SEM) with energy dispersive spectroscopy (EDS) (AMBER FIB-SEM, Tescan, Czech Republic; EDS/EBSD: Bruker Nano GmbH, Germany). Some of the results are shown in Figure 1. The results of EDS scans for spinel formed at the positions 11 to 16 indicated in Figure 1 following sintering (but before thermal shock) are also provided in Table 19.

Table 19.

| Scan spot no. | MgO content (wt. %) | $Al_2O_3$ content (wt. %) |
|---|---|---|
| 11 | 26.7 | 73.3 |
| 12 | 27.1 | 72.6 |
| 13 | 26.8 | 73.1 |
| 14 | 25.9 | 74.1 |
| 15 | 24.5 | 75.5 |
| 16 | 26.1 | 73.9 |
| MW ± SD | 26.2 ± 0.9 | 73.8 ± 1.0 |

It can be seen that magnesia was lost during sintering of Composition #9 to form magnesium aluminate spinel (since the MgO content of the zirconia matrix decreased to 0.7 wt. %). Stabilisation of the tetragonal phase was also observed. The inventors posit that calcia provided by the CMA72 binder stabilised the tetragonal phase. The EDS data indicates that this stabilisation during sintering involves all of the zirconia grains, including large ones (up to 5 mm), particularly close to the grain boundaries. Within large grains (up to 5 mm), the initial chemical composition was found after sintering around 15 to 20 $\mu$m away from the grain boundaries.

The EDS point analyses 2, 3, 5, and 9 also show that there is a depletion of the fine zirconia matrix by magnesia; the magnesia content is reduced to 0.7 ± 0.2 wt.%, while the calcia content increases in the fine zirconia matrix to 2.3 ± 0.5 wt.%. This may be taken to indicate diffusion of calcium ions into the zirconia lattice, providing a stabilization of the high temperature phases. The X-ray diffraction data indicates that the tetragonal phase is stabilized. Close to the grain boundaries of the large zirconia grains (EDS scans 1, 7 and 8), also a depletion by magnesia was registered. Small precipitates are formed close to the grain boundaries of large (>1 mm) zirconia grains. These have also been identified as magnesium aluminate spinel. At distances >15 $\mu$m from the grain boundary, the initial chemical composition of the co-stabilized zirconia was measured. The EDS point analyses 11 to 15 clearly identify magnesium aluminate spinel that was formed during sintering.

Stabilization of an already stabilized zirconia during heat treatment is achieved, thus increasing the tetragonal phase content, thus improving the thermal shock performance of the material.

**Claims**

1.   A mixture comprising zirconia and binder, wherein the binder comprises at least two oxides selected from: calcium oxide, magnesium oxide, yttrium oxide, cerium oxide, titanium oxide, europium oxide, scandium oxide, ytterbium oxide, gadolinium oxide, gadolinium zirconium oxide and neodymium zirconium oxide.

2.   A mixture according to claim 1, wherein either:

(a) the zirconia is pre-stabilised zirconia containing at least 10 vol.% tetragonal phase; or
(b) the zirconia is monoclinic zirconia and the mixture further comprises one or more stabilizers in an amount sufficient to obtain, following heat treatment, pre-stabilised zirconia containing at least 10 vol.% tetragonal phase.

3.   A mixture according to any preceding claim, wherein the binder is present in an amount up to about 8.5 wt. %, for example, up to about 6.0 wt. %, for example, from about 2.0 wt. % to about 6.0 wt. %, based on the total dry weight of the zirconia.

4.   A mixture according to any preceding claim, wherein the binder is:

(a) an aluminate comprising calcium oxide and magnesium oxide; and/or yttrium oxide; and/or cerium oxide; and/or
(b) the binder comprises a calcium aluminate mineralogical phase and a magnesium aluminate spinel mineralogical phase, optionally further comprising less than about 15 wt. % lime ($CaO_2$) based on the dry weight of the binder.

5.   A mixture according to any preceding claim, wherein at least a portion of the zirconia is zirconia stabilized by yttrium oxide, calcium oxide, magnesium oxide and/or cerium oxide, optionally wherein:

(a) the zirconia is stabilized by yttrium oxide, optionally wherein the zirconia is stabilised with up to about 8 wt. % yttrium oxide, further optionally having a dso of from about 2 $\mu$m to about 125 $\mu$m and a $d_{90}$ of from about 10 $\mu$m to about 425 $\mu$m;
(b) the zirconia is stabilized by magnesium oxide, optionally wherein the zirconia is stabilised with up to about 5 wt. % magnesium oxide, further optionally having a $d_{50}$ of from about 400 $\mu$m to about 450 $\mu$m and a $d_{90}$ of from about 800 $\mu$m to about 850 $\mu$m; or
(c) the zirconia is co-stabilized by two or more of yttrium oxide, magnesium oxide, calcium oxide and cerium oxide, for example, co-stabilized by yttrium oxide and magnesium oxide.

6.   A mixture according to any preceding claim, wherein the mixture comprises at least about 90.0 wt. % zirconia, based on the total dry weight of the mixture, and/or wherein the mixture comprises up to about 40 wt. % water, based on the total dry weight of the zirconia and the binder.

7.   A mixture according to any preceding claim, further comprising an additive selected from an accelerator, retarder, pH controller, rheology modifier and combinations thereof, optionally wherein the total amount of additive is from about 0.1 wt. % to about 5 wt. %, based on the total dry weight of the zirconia and the binder.

8.   A mixture according to any preceding claim, wherein following heat treatment of the mixture to form a refractory material: (i) at least 30 vol. %, for example, 40 vol. % of the zirconia in the refractory material has a tetragonal phase; and/or (ii) the vol. % of tetragonal phase in the refractory material is greater than the vol.% of tetragonal phase in the mixture prior to heat treatment; and/or (iii) zirconia in the refractory material is stabilized by two or more of yttria, magnesia, calcia and ceria, and/or (iv) a majority of zirconia grains in the microstructure of the refractory material are less than 20 mm in size.

**EP 4 491 600 A1**

9. A process for preparing a refractory material, comprising shaping the mixture according to any one of claims 1-8 and heat treating at a temperature suitable to obtain a refractory material.

10. A process according to claim 9, wherein:

(a) shaping comprises pressing, casting, molding, extruding or coating;
(b) heat treating comprises a dwell time between about 0.5 and 10 hours at a dwell temperature of at least about 1200 °C;
(c) the heat treating comprises sintering, optionally in an oxidizing atmosphere, at a heating rate of 1-5 °C/min to the dwell temperature, which is optionally between about 1500 °C and 1700 °C; and/or
(d) the process further comprises preparing the mixture in dry form at a first location, and shaping the mixture and heat treating in a second location, optionally wherein water and/or additives are combined with the dry mixture prior to shaping.

11. A refractory material obtainable by: (i) a process according to any of claims 9 or 10; (ii) shaping and heat treating a mixture according to any one of claims 1-8 at a suitable temperature to obtain a refractory material.

12. A refractory material according to claim 11, having:

(a) a remaining strength of at least 20 %, for example, at least 50 %, or at least 70 %, wherein remaining strength is determined by equation (1):

$$(1) \quad [(\text{flexural strength, } \sigma_{\text{Retained}} \text{ (MPa) according to DIN EN 993-6, following one thermal shock treatment at 950 °C in accordance with DIN EN 993-11)} / (\text{flexural strength, } \sigma_{\text{RT}} \text{ (MPa) according to DIN EN 993-6, before thermal shock treatment})] \times 100 \quad (1)$$

and/or
(b) a remaining Young's modulus of at least 20 %, for example, at least 50 %, or at least 70 %, wherein remaining Young's modulus is determined by equation (2):

$$(2) \quad [(\text{Young's modulus, } E_{\text{Retained}} \text{ (GPa) according to DIN 843-2, following one thermal shock treatment at 950 °C in accordance with DIN EN 993-11)} / (\text{Young's modulus, } E_{\text{RT}} \text{ (GPa) according to DIN 843-2, before thermal shock treatment})] \times 100$$

13. A refractory material according to claims 11 or 12, wherein:

(a) at least 30 vol. %, for example, 40 vol. % of the zirconia in the refractory material has a tetragonal phase; and/or (ii) the vol. % of tetragonal phase in the refractory material is greater than the vol.% of tetragonal phase in the mixture prior to heat treatment; and/or (iii) zirconia in the refractory material is stabilized by two or more of yttria, magnesia, calcia and ceria, and/or (iv) a majority of zirconia grains in the microstructure of the refractory material are less than 20 mm in size;
(b) the refractory material has one or more of the following properties: (i) a shrinkage of no greater than about 10 %; (ii) an open porosity of less than about 30 %; (iii) a $CTE_{1000 \, °C}$ of from about 6.8 to 11 x $10^{-6}$/K; and/or
(c) the refractory material is in the form of a burner, burner nozzle, stopper, sliding gate plate, heat shield, filter (e.g., for melt filtration) and sensor.

14. Use of binder comprising at least two oxides selected from calcium oxide, magnesium oxide, yttrium oxide, cerium oxide, titanium oxide, europium oxide, scandium oxide, ytterbium oxide, gadolinium oxide, gadolinium zirconium oxide and neodymium zirconium oxide, for example, binder comprising calcium oxide and magnesium oxide, for example, binder comprising a combination of calcium aluminate and magnesium aluminate spinel, in a mixture comprising zirconia to (i) stabilize, for example, increase the proportion of, tetragonal phase zirconia in a refractory material formed from the mixture, or (ii) improve the thermal shock resistance of a refractory material formed from the mixture.

15. Use of a mixture according to any one of claims 1 to 8 to improve the thermal shock resistance of a refractory material formed therefrom.

Fig. 1

Europäisches
Patentamt
European
Patent Office
Office européen
des brevets

# EUROPEAN SEARCH REPORT

Application Number

EP 23 30 6217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 506 023 A (GUIGONIS JACQUES [FR]) 19 March 1985 (1985-03-19) | 1,3-6,8, 9,11, 13-15 | INV. C04B35/482 C04B28/06 |
| Y | * examples; tables * | 1-15 | C04B35/63 C04B35/66 |
| X | US 2014/144183 A1 (DEMIRBAS MEMDUH [US] ET AL) 29 May 2014 (2014-05-29) | 1 | C04B7/32 B22D41/52 |
| A | * example 1; table 1 * | 2-15 | C04B35/64 |
| X | US 2017/081244 A1 (GODA KOJI [JP] ET AL) 23 March 2017 (2017-03-23) | 1,4 | |
| Y | * whole document, but see para.[0051] * | 1-15 | |
| Y,D | US 6 730 159 B1 (FALASCHI JEAN-PIERRE [FR] ET AL) 4 May 2004 (2004-05-04) * the whole document * | 1-15 | |

TECHNICAL FIELDS
SEARCHED (IPC)

C04B
B22D

The present search report has been drawn up for all claims

| Place of search | Date of completion of the search | Examiner |
|---|---|---|
| Munich | 14 December 2023 | Munro, Brian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 30 6217**

This annex lists the patent family members relating to the patent documents cited in  the above-mentioned European search report.
The members are as contained in the European Patent Office EDP file on
The European Patent Office is in no way liable for these particulars which are merely given for the purpose of information.

**14-12-2023**

| Patent document cited in search report | | Publication date | Patent family member(s) | | Publication date |
|---|---|---|---|---|---|
| US 4506023 | A | 19-03-1985 | AU | 556018 B2 | 16-10-1986 |
| | | | EP | 0106739 A1 | 25-04-1984 |
| | | | ES | 8501355 A1 | 16-11-1984 |
| | | | FR | 2533208 A1 | 23-03-1984 |
| | | | JP | H0140791 B2 | 31-08-1989 |
| | | | JP | S59131573 A | 28-07-1984 |
| | | | US | 4506023 A | 19-03-1985 |
| US 2014144183 | A1 | 29-05-2014 | CN | 105164083 A | 16-12-2015 |
| | | | EP | 2925701 A1 | 07-10-2015 |
| | | | JP | 2016501815 A | 21-01-2016 |
| | | | JP | 2019001712 A | 10-01-2019 |
| | | | KR | 20150097549 A | 26-08-2015 |
| | | | TW | 201429917 A | 01-08-2014 |
| | | | TW | 201803822 A | 01-02-2018 |
| | | | US | 2014144183 A1 | 29-05-2014 |
| | | | US | 2017225993 A1 | 10-08-2017 |
| | | | WO | 2014085223 A1 | 05-06-2014 |
| US 2017081244 | A1 | 23-03-2017 | US | 2017081244 A1 | 23-03-2017 |
| | | | WO | 2015132848 A1 | 11-09-2015 |
| US 6730159 | B1 | 04-05-2004 | AU | 3060100 A | 18-08-2000 |
| | | | DE | 60000779 T2 | 03-07-2003 |
| | | | EP | 1152992 A1 | 14-11-2001 |
| | | | ES | 2183778 T3 | 01-04-2003 |
| | | | FR | 2788762 A1 | 28-07-2000 |
| | | | JP | 4653317 B2 | 16-03-2011 |
| | | | JP | 2002537201 A | 05-11-2002 |
| | | | US | 6730159 B1 | 04-05-2004 |
| | | | WO | 0044684 A1 | 03-08-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6730159 B1